# FASCICULE DE BREVET EUROPEEN

(11) **EP 1 701 855 B1**
(45) Date de publication et mention de la délivrance du brevet: **07.05.2008**
(21) Numéro de dépôt: 04803675.0
(22) Date de dépôt: 09.12.2004
(51) Int. Cl.: B60C 17/00

(54) **PNEUMATIQUE A FLANCS AUTOPORTEURS ASYMETRIQUES**
REIFEN MIT ASYMMETRISCHEN SELBSTSTÜTZENDEN SEITENWÄNDEN
TYRE WITH ASYMMETRIC SELF-SUPPORTING SIDEWALLS

(30) Priorité: 30.12.2003 FR 0315552
(43) Date de publication de la demande: 20.09.2006
(73) Titulaire: Société de Technologie Michelin, 63000 Clermont-Ferrand (FR); Michelin Recherche et Technique S.A., 1763 Granges-Paccot (CH)
(72) Inventeur: WILLARD, Walter, Lee, Jr., Greenville, SC 29609 (US)
(74) Mandataire: Dequire, Philippe Jean-Marie Denis
(86) Numéro de dépôt international: PCT/EP2004/014018
(87) Numéro de publication internationale: WO 2005/072992

(56) Documents cités:
- EP-A- 1 160 101
- US-A1- 2002 062 894
- US-B1- 6 263 935
- US-B1- 6 561 245

## Description

La présente invention concerne un pneumatique à mobilité étendue de type à flancs autoporteurs asymétriques, avec des caractéristiques de confort et de comportement optimales.

Depuis quelques années, les manufacturiers de pneumatiques consentent des efforts particulièrement importants afin de développer des solutions originales à un problème datant du début même de l'utilisation des roues chaussées de pneus de type gonflés, à savoir comment permettre au véhicule de poursuivre sa route malgré une perte importante ou totale de pression d'un ou plusieurs pneumatiques. Pendant des décennies, la roue de secours fut considérée comme la solution unique et universelle. Puis, plus récemment, les avantages considérables liés à sa suppression éventuelle sont apparus. Le concept de « mobilité étendue » se développe. Les techniques associées permettent de rouler avec le même pneumatique, en fonction de certaines limites à respecter, après une crevaison ou une chute de pression. Cela permet par exemple de se rendre à un point de dépannage sans devoir s'arrêter, dans des circonstances souvent hasardeuses, pour installer la roue de secours.

Deux grands types de technologies pour mobilité étendue apparaissent aujourd'hui sur le marché automobile. D'une part, on retrouve les pneumatiques de type autoporteur, (souvent désignés par leur appellation en langue anglaise ZP pour « zero pressure »). Les pneus autoporteurs sont susceptibles de supporter une charge à pression réduite, voire sans pression, grâce à des flancs renforcés, le plus souvent au moyen d'inserts en matière caoutchoutique, prévus dans les flancs. Ce type de solution présente l'inconvénient d'avoir des flancs relativement rigides, affectant de ce fait le confort et l'endurance. D'importantes masses de matériaux sont nécessaires pour conférer aux flancs la rigidité requise à la fonction autoporteuse. Un tel pneumatique est connu, par exemple, du US-A-6 561 245.

D'autre part, on retrouve des roues équipées d'appuis, susceptibles de supporter l'intérieur de la bande de roulement d'un pneumatique lors d'un affaissement des flancs suite à une chute de pression. Cette solution est avantageusement couplée à un pneumatique comportant une zone basse susceptible de minimiser les risques de glissement du pneumatique hors de la jante. Cette solution est avantageuse puisqu'elle permet de conserver sensiblement intactes les caractéristiques de roulage en conditions normales. Par contre, elle présente l'inconvénient de nécessiter une pièce additionnelle, l'appui, pour chacune des roues du véhicule.

Pour pallier ces différents inconvénients, l'invention propose un pneumatique adapté pour roulage à mobilité étendue, comportant au moins une structure de renfort de type carcasse ancrée de chaque côté dudit pneumatique dans un bourrelet dont la base est destinée à être montée sur un siège de jante, chacun desdits bourrelets s'étendant sensiblement radialement extérieurement sous la forme de flancs, soit un flanc intérieur, destiné à être positionné du côté intérieur du véhicule, et un flanc extérieur, destiné à être positionné du côté extérieur du véhicule, les flancs intérieur et extérieur rejoignant radialement vers l'extérieur une bande de roulement, la structure de renfort de type carcasse s'étendant circonférentiellement depuis le bourrelet vers ledit flanc, une armature de sommet, chacun des bourrelets comportant par ailleurs une zone d'ancrage permettant le maintien de la structure de renfort, chacun desdits flancs étant renforcé par un insert de flanc, soit un insert intérieur dans le flanc intérieur, et un insert extérieur dans le flanc extérieur, lesdits inserts étant constitués de composition de caoutchouc permettant au flanc de supporter une charge correspondant à une partie du poids du véhicule lors d'une situation dans laquelle la pression de gonflage est sensiblement réduite ou nulle, le flanc intérieur (et plus particulièrement l'insert de ce flanc) ayant un module sensiblement plus élevé que le flanc extérieur (et plus particulièrement que l'insert de ce flanc), l'insert extérieur et l'insert intérieur étant subdivisés en un nombre inégal de zones.

Un tel pneumatique possède des qualités de comportement et d'endurance supérieures à un pneu à flanc renforcé de type connu. Les niveaux de performance envisagés sont comparables aux niveaux des bons pneumatiques sans flancs renforcés.

En outre, en virage, on remarque une augmentation de la surface de l'aire de contact du côté extérieur, ce qui favorise le comportement du pneumatique. Avec un flanc dont le module est inférieur, on peut obtenir une meilleure déradialisation du flanc extérieur.

Par ailleurs, un tel agencement offre la possibilité de diminuer le poids du flanc extérieur par rapport au flanc intérieur, avec un gain de poids net pour l'ensemble du produit. Enfin, le flanc extérieur peut être plus mince que le flanc intérieur : une telle asymétrie d'épaisseur de flancs peut permettre de diminuer le poids du pneumatique.

Selon un exemple de réalisation, l'insert extérieur comporte au moins deux zones, par exemple une zone axialement extérieure, de module donné, et une zone axialement intérieure dont le module est plus faible. Ces caractéristiques permettent d'améliorer la durabilité et le confort, de diminuer la résistance au roulement, et d'augmenter l'aire de contact avec la surface de roulement.

Selon un autre exemple de réalisation, l'insert extérieur comporte trois zones, par exemple une zone sensiblement centrale, ayant le module le plus élevé, une zone axialement intérieure, de module inférieur à celui de la zone centrale, et une zone axialement extérieure, aussi de module inférieur à celui de la zone centrale. La zone interne étant la plus sollicitée, le positionnement de ce mélange spécifique à cet endroit permet d'optimiser l'effet de support.

Selon un exemple de réalisation, le module de la zone axialement intérieure est supérieur à celui de la zone axialement extérieure. Selon un autre exemple de réalisation, le module de la zone axialement extérieure et le module de la zone axialement intérieure sont sensiblement égaux.

L'insert intérieur comporte de manière préférentielle au moins deux zones, par exemple une zone axialement extérieure, de module donné, et une zone axialement intérieure dont le module est plus faible.

Selon une variante avantageuse, l'insert intérieur comporte trois zones, par exemple une zone sensiblement centrale, ayant le module le plus élevé, une zone axialement intérieure, de module inférieur à celui de la zone centrale, et une zone axialement extérieure, aussi de module inférieur à celui de la zone centrale.

Selon un mode de réalisation avantageux du pneumatique selon l'invention, un des inserts de flanc est de préférence constitué d'une composition de caoutchouc présentant un module d'extension sécant MA10 à 10 % de déformation, mesuré à 23° C selon la norme ASTM D 412, allant de 5 à 13 Mpa.

La composition de caoutchouc d'une portion d'insert comprend de préférence (pce : parties en poids pour cent parties d'élastomère(s)) :
- de 20 à 100 pce de caoutchouc naturel ou d'un polyisoprène de synthèse à fort taux d'enchaînements cis-1,4, et
- de 80 à 0 pce d'un polybutadiène et/ou d'un copolymère du butadiène et d'un monomère vinyl aromatique, tel qu'un copolymère styrène-butadiène.

De manière avantageuse, la composition de caoutchouc d'un insert comprend :
- de 20 à 50 pce de caoutchouc naturel ou d'un polyisoprène de synthèse à fort taux d'enchaînements cis-1,4, et
- de 80 à 50 pce d'un polybutadiène et/ou d'un copolymère du butadiène et d'un monomère vinyl aromatique, tel qu'un copolymère styrène-butadiène.

De manière préférentielle, chacun desdits inserts de flanc présente une épaisseur allant de 3 mm à 20 mm, et de préférence de 5 mm à 14 mm.

Tous les détails de réalisation sont donnés dans la description qui suit, complétée par les figures 1 à 6 dans lequelles:
la figure 1 illustre une coupe radiale montrant essentiellement les bourrelets, les flancs, et le sommet d'un exemple de réalisation d'un premier type de pneumatique selon l'invention;
la figure 2 illustre une coupe radiale montrant essentiellement les bourrelets, les flancs, et le sommet d'un exemple de réalisation d'un second type de pneumatique selon l'invention;
la figure 3 illustre une coupe radiale montrant essentiellement les bourrelets, les flancs, et le sommet d'un exemple de réalisation d'un autre type de pneumatique selon l'invention;
la figure 4 illustre une coupe radiale montrant essentiellement les bourrelets, les flancs, et le sommet d'un exemple de réalisation d'un autre type de pneumatique selon l'invention ;
la figure 5 illustre une coupe radiale montrant essentiellement les bourrelets, les flancs, et le sommet d'un autre exemple de réalisation de pneumatique selon l'invention;
la figure 6 illustre une coupe radiale montrant essentiellement les bourrelets, les flancs, et le sommet d'un autre exemple de réalisation de pneumatique selon l'invention.

L'armature de renforcement ou renforcement des pneumatiques est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Cependant, il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les fils des différentes structures de renfort sont appliqués directement sur les couches adjacentes de mélanges caoutchoutiques, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchoutiques et les renforts sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, la plupart des exemples de réalisation de pneumatiques décrits dans ce document ne disposent pas du "traditionnel" retournement de nappe carcasse autour d'une tringle. Dans ces exemples, ce type d'ancrage est remplacé par un agencement dans lequel on dispose de façon adjacente à ladite structure de renfort de flanc des filaments circonférentiels, le tout étant noyé dans une composition de caoutchouc d'ancrage ou de liaison.

II existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou de renforts sous forme de filaments ou de bandelettes.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les fils de renforts d'une nappe carcasse dans le procédé classique, et les fils correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les filaments circonférentiels, la composition de caoutchouc et les portions adjacentes de renfort de flanc d'une zone basse réalisée avec un procédé avec application sur un noyau toroïdal.

Dans la présente description, le terme "fil" désigne en toute généralité aussi bien des monofilaments que des multifilaments ou des assemblages comme des câbles, des retors ou encore tout type d'assemblage équivalent, et ceci, quels que soient la matière et le traitement de ces fils. II peut s'agir par exemple de traitements de surface, enrobage ou pré-encollage pour favoriser l'adhérence sur le caoutchouc. L'expression « fil unitaire » désigne un fil composé d'un seul élément, sans assemblage. Le terme « multifilaments » désigne au contraire un assemblage d'au moins deux éléments unitaires pour former un câble, un retors, etc.

Par caractéristiques du fil, on entend par exemple ses dimensions, sa composition, ses caractéristiques et propriétés mécaniques (notamment le module), ses caractéristiques et propriétés chimiques, etc.

Dans la présente description, on entend par "contact" entre un fil et une couche de gomme de liaison le fait qu'au moins une partie de la circonférence extérieure du fil est en contact intime avec la composition de caoutchouc constituant de la gomme de liaison.

On sait que, de façon traditionnelle, la ou les nappes de carcasse sont retournées autour d'une tringle. La tringle remplit alors une fonction d'ancrage de la carcasse. Ainsi, notamment, elle supporte la tension se développant dans les fils de carcasse par exemple sous l'effet de la pression de gonflage. L'autre type d'agencement décrit dans le présent document permet d'assurer une fonction similaire d'ancrage. Il est également connu d'utiliser la tringle de type traditionnel pour assurer une fonction de serrage du bourrelet sur une jante. L'autre type d'agencement décrit dans le présent document permet également d'assurer un rôle similaire de serrage.

On désigne "flancs" les portions du pneumatique le plus souvent de faible rigidité de flexion situées entre le sommet et les bourrelets. On appelle "mélange flancs" les mélanges caoutchoutiques situés axialement extérieurement relativement aux fils de la structure de renforcement de la carcasse et à leur gomme de liaison. Ces mélanges ont habituellement un bas module d'élasticité.

On appelle "bourrelet" la portion du pneumatique adjacente radialement intérieurement au flanc.

On entend par "module d'extension MA10" d'un composition de caoutchouc, un module d'extension sécant apparent obtenu à une déformation d'extension uniaxiale de l'ordre de 10% mesuré à 23°C selon la norme ASTM D 412.

Par l'expression « à base de », on entend de manière connue que le constituant qui suit est présent à titre majoritaire dans la composition.

Pour rappel, "radialement vers le haut", ou "radialement supérieur" ou "radialement extérieurement" signifie vers les plus grands rayons.

Une structure de renfort ou de renforcement de type carcasse sera dite radiale lorsque ses fils sont disposés à 90°, mais aussi, selon la terminologie en usage, à un angle proche de 90°.

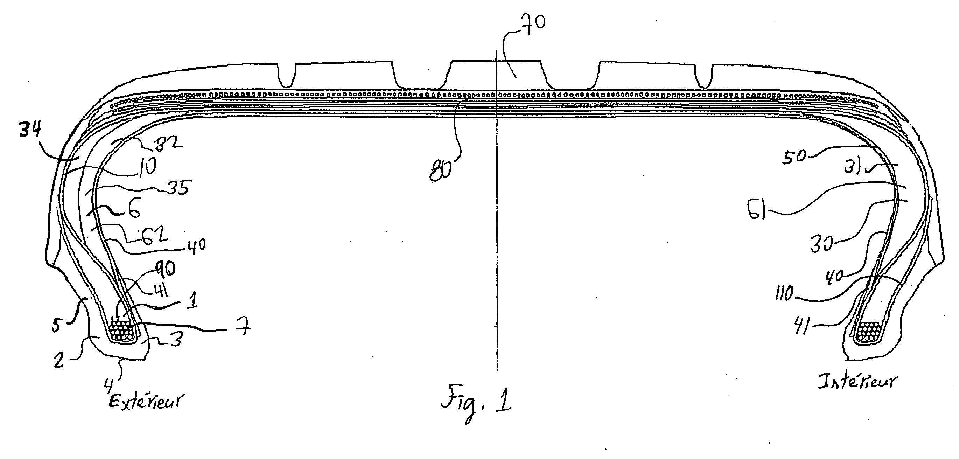

La figure 1 illustre la zone basse, notamment le bourrelet 1 d'une première forme d'exécution du pneumatique selon l'invention. Le bourrelet 1 comporte une portion axialement externe 2 prévue et conformée de façon à être placée contre le rebord d'une jante. La portion supérieure, ou radialement externe de la portion 2 forme une portion adaptée 5 au crochet de jante. Cette portion est souvent incurvée axialement vers l'extérieur, tel qu'illustré à la figure 1. La portion 2 se termine radialement et axialement vers l'intérieur par un siège de bourrelet 4, adapté pour être disposé contre un siège de jante. Le bourrelet comporte également une portion axialement interne 3, s'étendant sensiblement radialement depuis le siège 4 vers le flanc 6.

Le pneumatique comporte également une structure de renfort 10 ou de renforcement de type carcasse pourvue de renforts avantageusement configurés selon un agencement sensiblement radial. Cette structure peut être agencée de façon continue d'un bourrelet à l'autre, en passant par les flancs et le sommet du pneumatique, ou encore, elle peut comporter deux ou plusieurs parties, agencées par exemple le long des flancs, sans couvrir la totalité du sommet.

Afin de positionner les fils de renforcement de façon aussi précise que possible, il est très avantageux de confectionner le pneumatique sur support rigide, par exemple un noyau central imposant la forme de sa cavité intérieure. On applique sur ce noyau, dans l'ordre requis par l'architecture finale, tous les constituants du pneumatique, qui sont disposés directement à leur place finale, sans que le profil du pneumatique doive être modifié lors de la confection.

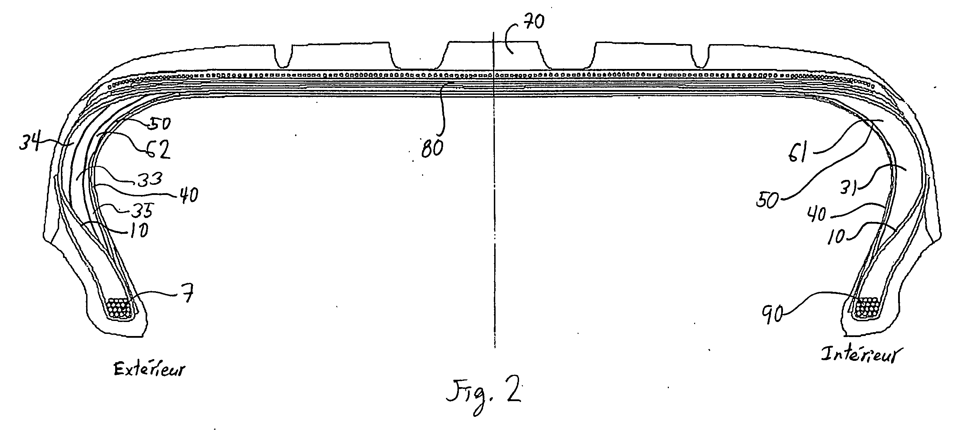

Deux principaux types d'ancrage de la structure de renfort de type carcasse sont possibles. De façon typique, tel qu'illustré aux figures 1 et 2 la zone d'ancrage comporte une tringle 7, constituée d'un arrangement multifils, autour de laquelle la structure de renfort 10 est enroulée, de préférence en partant du côté axialement intérieur puis en se dirigeant vers le côté axialement extérieur, après un passage radialement intérieurement par rapport à la tringle. L'extrémité libre 110 de la structure de renfort 10 remonte ensuite radialement extérieurement. Ce type d'ancrage, classiquement connu et largement utilisé, est simple à réaliser, économique, et durable. Le retournement de ladite structure 10 autour d'une tringle 7 au niveau du bourrelet 1 assure l'ancrage de la structure de renfort de type carcasse dans le bourrelet.

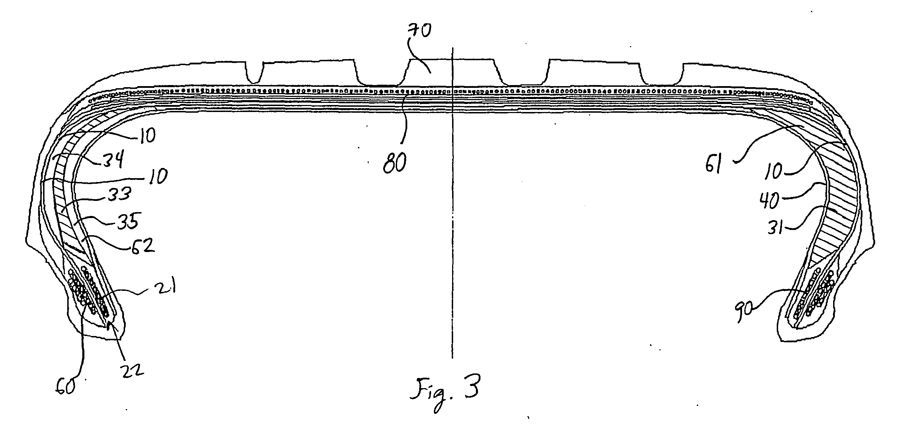

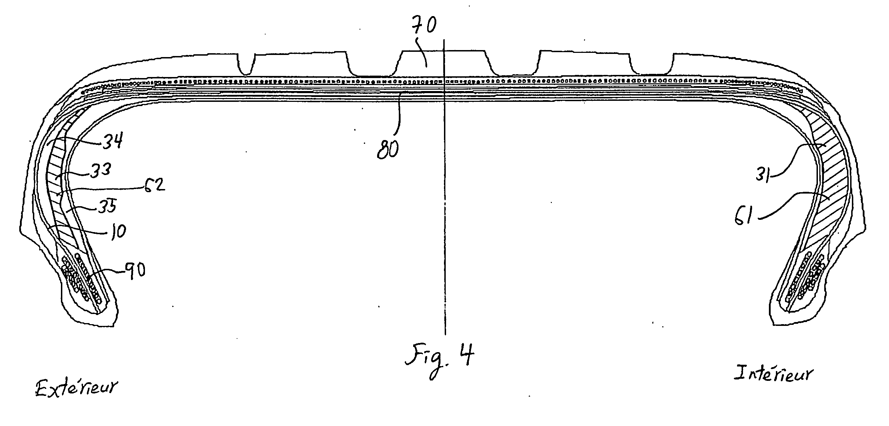

Autrement, la fonction d'ancrage peut être réalisée grâce à un agencement de fils circonférentiels, tel qu'illustré par exemple aux figures 3 à 5. Des fils circonférentiels 21 agencés de préférence sous forme de piles 22, forment un agencement de fils d'ancrage, prévu dans chacun des bourrelets. Ces fils sont de préférence métalliques, et éventuellement laitonnés. Diverses variantes prévoient avantageusement des fils de nature textile, comme par exemple en aramide, nylon, PET, PEN, ou hybride, ou autre, comme par exemple en fibres de verre. Dans chaque pile, les fils sont avantageusement sensiblement concentriques et superposés.

Afin d'assurer un parfait ancrage de la structure de renfort, on réalise un bourrelet composite stratifié. A l'intérieur du bourrelet 1, entre les alignements de fil de la structure de renfort, on dispose les fils 21 orientés circonférentiellement. Ceux-ci sont disposés en une pile 22 comme sur les figures, ou en plusieurs piles adjacentes, ou en toute disposition judicieuse, selon le type de pneumatique et/ou les caractéristiques recherchées.

Les portions d'extrémité radialement internes de la structure de renfort 10 coopèrent avec les enroulements filaires. II se crée ainsi un ancrage de ces portions dans lesdits bourrelets. Afin de favoriser cet ancrage, l'espace entre les fils circonférentiels et la structure de renfort est occupé par un composition de caoutchouc 60 de liaison ou d'ancrage. On peut également prévoir l'utilisation de plusieurs mélanges ayant des caractéristiques différentes, délimitant plusieurs zones, les combinaisons de mélanges et les agencements résultants étant quasi-illimités. A titre d'exemple non limitatif, le module d'extension d'un tel mélange peut atteindre ou dépasser 10 à 15 MPa, et même dans certains cas atteindre, voire dépasser 40 MPa.

Les arrangements de fils peuvent être agencés et fabriqués de plusieurs façons. Par exemple, une pile peut avantageusement être constituée d'un seul fil enroulé (sensiblement à zéro degré) en spirale sur plusieurs tours, de préférence depuis le plus petit diamètre vers le plus grand diamètre. Une pile peut également être constituée de plusieurs fils concentriques posés l'un dans l'autre, de façon à ce que l'on superpose des anneaux de diamètre progressivement croissant. II n'est pas nécessaire d'ajouter un mélange de caoutchouc pour assurer l'imprégnation du fil de renfort, ou des enroulements circonférentiels de fil.

Les figures 1 à 6 illustrent divers modes de réalisation préférentiels selon l'invention. Un insert de flanc 30, constitué d'une composition de caoutchouc sensiblement rigide, s'étend sensiblement radialement entre la région de la base du flanc, jusqu'à la région de l'épaule du pneumatique. Cet insert a pour fonction principale de permettre au pneumatique de supporter une certaine charge lors d'une utilisation à faible pression, voire à pression nulle.

Bien que les figures illustrent un insert de dimension importante, une fonction similaire pourrait être remplie par un ou plusieurs inserts de taille sensiblement différente, notamment plus petite.

Dans une proportion importante du flanc, l'insert 30 occupe une largeur supérieure à 50 % de l'épaisseur totale de la paroi du flanc. Dans les différentes figures, différents agencements asymétriques des flancs sont présentés, comportant, de manière générale, un flanc intérieur 61, destiné à être positionné du côté intérieur du véhicule, et un flanc extérieur 62, destiné à être positionné du côté extérieur du véhicule, les flancs intérieur et extérieur rejoignant radialement vers l'extérieur une bande de roulement 70, chacun desdits flancs étant renforcé par un insert de flanc 30, soit un insert intérieur 31 dans le flanc intérieur 61, et un insert extérieur 32 dans le flanc extérieur 62, lesdits inserts 31, 32 étant constitués de composition de caoutchouc permettant aux flancs de supporter une charge correspondant à une partie du poids du véhicule lors d'une situation dans laquelle la pression de gonflage est sensiblement réduite ou nulle, le flanc intérieur 61 (et plus particulièrement l'insert 31 de ce flanc) ayant un module sensiblement plus élevé que le flanc extérieur 62 (et plus particulièrement que l'insert 32 de ce flanc).

Dans les différents exemples illustrés, une armature de sommet 80, et des bourrelets comportant par ailleurs une zone d'ancrage 90 permettant le maintien de la structure de renfort 10, complètent les principaux éléments architecturaux.

L'insert extérieur 32 et l'insert intérieur 31 sont subdivisés en un nombre inégal de zones. Dans les exemples de réalisation des figures 1 à 5, l'insert extérieur 32 comporte un nombre de zones plus élevé que l'insert intérieur 31, et l'insert extérieur 32 comporte au moins deux zones.

Dans l'exemple de la figure 1; les deux zones du flanc extérieur consistent en une zone axialement extérieure 34, de module donné, et une zone axialement intérieure 35 dont le module est plus faible.

Dans les exemples de réalisation des figures 2 à 5, l'insert extérieur 32 comporte trois zones 33, 34 et 35 : ces trois zones consistent en une zone sensiblement centrale 33, ayant le module le plus élevé, une zone axialement intérieure 35, de module inférieur à celui de la zone centrale, et une zone axialement extérieure 34, aussi de module inférieur à celui de la zone centrale. Le module de la zone axialement intérieure 35 est de préférence supérieur à celui de la zone axialement extérieure 34.

Selon une variante de réalisation, le module de la zone axialement extérieure 34 et le module de la zone axialement intérieure 35 sont sensiblement égaux .

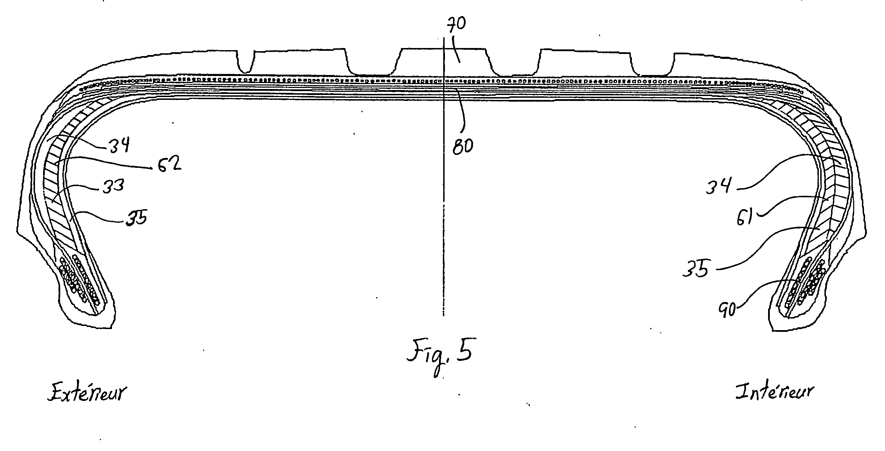

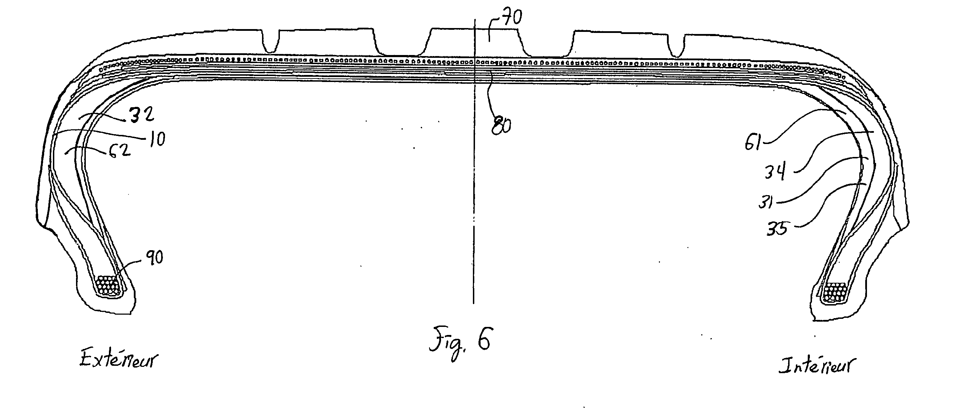

De façon similaire, dans les exemples de réalisation des figures 5 et 6, l'insert intérieur 31 comporte au moins deux zones, par exemple une zone axialement extérieure, de module donné, et une zone axialement intérieure dont le module est plus faible.

Selon une variante non illustrée, l'insert intérieur comporte trois zones, par exemple une zone sensiblement centrale, ayant le module le plus élevé, une zone axialement intérieure, de module inférieur à celui de la zone centrale, et une zone axialement extérieure, aussi de module inférieur à celui de la zone centrale.

Axialement intérieurement par rapport à l'insert 30, une couche de composition de caoutchouc sensiblement étanche 40 s'étend avantageusement sur sensiblement toute la portion interne du pneumatique. La couche d'étanchéité étant la plus intérieure, toutes les autres couches bénéficient de l'effet barrière ainsi créé. Le mélange de cette couche est avantageusement à base de caoutchouc butyl. Le tableau I donne plus de détails sur les principaux éléments constituants de ce mélange. Signalons en outre le module d'extension relativement faible de ce mélange.

Tel qu'illustré dans les différents exemples de réalisation, la couche 40 est de préférence ancrée dans la portion axialement interne du bourrelet. Cette portion ancrée 41 ainsi résultante procure une protection efficace contre les éventuelles amorces de fissures, ou de décollement, etc.

Une couche de mélange de liaison 50 peut être disposée entre la couche d'étanchéité 40 et l'insert 30. Cette couche est constituée d'un composition de caoutchouc de module d'extension sensiblement intermédiaire par rapport aux deux types de matériaux qui l'entourent : soit d'une part la couche d'étanchéité 40, de faible module d'extension, et l'insert 30, de module d'extension sensiblement élevé.

La couche 50 s'étend avantageusement d'un bourrelet à l'autre, y compris dans la zone du sommet. Autrement, cette couche s'étend sensiblement sur toute la hauteur des inserts, sur chaque flanc, et est interrompue dans la zone du sommet.

La structure de renfort de type carcasse 10, chemine le long du flanc selon un parcours préférentiel voisin dudit insert 30. Ainsi, aux figures 1 et 2, ladite structure 10 est posée axialement extérieurement par rapport à l'insert 30 et chemine avantageusement en contact direct avec l'insert, sur la plus grande partie du parcours du flanc.

Le contact direct entre la structure de renfort et l'insert permet d'optimiser les caractéristiques de rigidité et de résistance mécanique du flanc.

Le tableau 1 présente des exemples de composition de caoutchouc utilisées pour les différents éléments du pneumatique, des gammes d'épaisseurs préférentielles, ainsi que quelques propriétés représentatives de ces matériaux.

**TABLEAU I (pce : parties en poids pour cent parties d'élastomère(s))**

| | Couche interne | Couche de liaison | Insert de flanc | Couche intermédiaire |
|---|---|---|---|---|
| Ingrédient A | Caoutchouc Butyle (IIR) 40 -100 pce | (NR ou IR)* 40 -100 pce (de préférence >55%) | (NR ou IR)* 20-100 pce | (NR ou IR)* 40 -100 pce |
| Ingrédient B | (NR ou IR)* 0-60 pce | SBR 0-60 pce | SBR 0-50 pce | SBR 0-60 pce |
| Ingrédient C | SBR 0-60 pce | BR 0-60 pce | BR 0-80 pce | BR 0-60 pce |
| | | | | |
| Module (Mpa) | 1.5-3.5 | 2-4 | 5-13 | 2-4 |
| Epaisseur préférentielle (mm) | Entre 0.5 -1.2 | Entre 0.4 - 2 Préférentiellement 0.6 - 1.2 | Entre 3 - 20 Préférentiellement 5-14 | Entre 0.2 - 1.5** |

| | | | | |
|---|---|---|---|---|
| * caoutchouc naturel ou polyisoprène de synthèse à fort taux d'enchaînements cis-1,4 ** la mesure de l'épaisseur est effectuée depuis la partie externe (ou dos) des fils de la structure 10 (et non pas entre les fils). | | | | |

Voici enfin quelques illustrations, à titre d'exemples non limitatifs, de formulations des différents mélanges :

### Composition de caoutchouc formant chaque insert de flanc:

la formulation de mélange suivante, en parties en poids pour cent parties d'élastomères (pce):

| | |
|---|---|
| caoutchouc naturel: | 35 pce |
| polybutadiène: | 65 pce |
| noir de carbone N660: | 65 pce |
| " 6PPD ": | 3 pce |
| soufre: | 2,5 pce |
| " CBS ": | 3,5 pce |
| oxyde de zinc: | 3 pce |
| acide stéarique: | 3 pce, |

| | |
|---|---|
| où la " 6PPD " est la N-(1,3-diméthyl butyl)-N'-phényl-p-phénylènediamine, agent à la fois anti-oxydant et anti-ozonant, et la " CBS " est la N-cyclohexyl-benzothiazyl-sulfénamide, accélérateur de vulcanisation. | |

### Composition de caoutchouc formant la couche de liaison:

la formulation de mélange suivante, en parties en poids pour cent parties d'élastomères (pce):

| | |
|---|---|
| caoutchouc naturel: | 75 pce |
| copolymère styrène butadiène | 25 pce |
| noir de carbone N660: | 45 pce |
| huile aromatique: | 5 pce |
| " 6PPD " | 1 pce |
| soufre: | 2 pce |
| "CBS" | 1 pce |
| oxyde de zinc: | 3 pce |
| acide stéarique: | 1 pce |

### Couche de liaison à fixation d'oxygène améliorée:

la formulation de mélange suivante, en parties en poids pour cent parties d'élastomères (pce):

| | |
|---|---|
| caoutchouc naturel: | 75 pce |
| copolymère styrène butadiène | 25 pce |
| noir de carbone N660: | 45 pce |
| huile aromatique: | 5 pce |
| " 6PPD " | 1 pce |
| soufre: | 3.5 pce |
| "CBS" | 1 pce |
| oxyde de zinc: | 7 pce |
| acide stéarique: | 1 pce |
| sel de cobalt | 0.2 pce |

ou

| | |
|---|---|
| caoutchouc naturel: | 75 pce |
| copolymère styrène butadiène | 25 pce |
| noir de carbone N660: | 45 pce |
| huile aromatique: | 5 pce |
| "6PPD" | 1 pce |
| soufre: | 3.5 pce |
| "CBS " | 1 pce |
| oxyde de zinc: | 7 pce |
| acide stéarique: | 1 pce |
| sel de fer | 0.02 pce |

Où « pce » désigne le pourcentage d'élastomère en poids.

On notera que la couche étanche selon l'invention pourrait être constituée d'une composition de caoutchouc à base d'un élastomère autre que le caoutchouc butyl (IIR) par exemple un caoutchouc halobutyl (XIIR), un copolymère paraméthylstyrène-isobutylène.

La fabrication industrielle d'un pneumatique selon l'invention peut être réalisée selon plusieurs types de procédés. De manière avantageuse, on utilise un principe de pose sur noyau central permettant soit la pose individuelle des éléments constituants tels les mélanges caoutchoutiques et les renforts (fils) ou encore la pose de produits semi-finis tels des lamelles caoutchoutiques renforcées.

## Revendications

1. Pneumatique adapté pour roulage à mobilité étendue, comportant au moins une structure de renfort (10) de type carcasse ancrée de chaque côté dudit pneumatique dans un bourrelet dont la base est destinée à être montée sur un siège de jante, chacun desdits bourrelets s'étendant sensiblement radialement extérieurement sous la forme de flancs, soit un flanc intérieur (61), destiné à être positionné du côté intérieur du véhicule, et un flanc extérieur (62), destiné à être positionné du côté extérieur du véhicule, les flancs intérieur et extérieur rejoignant radialement vers l'extérieur une bande de roulement (70), la structure de renfort de type carcasse s'étendant circonférentiellement depuis le bourrelet vers ledit flanc, une armature de sommet (80), chacun des bourrelets comportant par ailleurs une zone d'ancrage permettant le maintien de la structure de renfort, chacun desdits flancs étant renforcé par un insert de flanc, soit un insert intérieur (31) dans le flanc intérieur, et un insert extérieur (32) dans le flanc extérieur, lesdits inserts étant constitués de composition de caoutchouc permettant aux flancs de supporter une charge correspondant à une partie du poids du véhicule lors d'une situation dans laquelle la pression de gonflage est sensiblement réduite ou nulle, **caractérisé en ce que** le flanc intérieur a un module sensiblement plus élevé que le flanc extérieur, l'insert extérieur (32) et l'insert intérieur (31) étant subdivisés en un nombre inégal de zones.

2. Pneumatique selon la revendication 1, dans lequel, l'insert extérieur (32) comporte un nombre de zones plus élevé que l'insert intérieur (31).

3. Pneumatique selon l'une des revendications 1 ou 2, dans lequel l'insert extérieur (32) comporte au moins deux zones (34, 35).

4. Pneumatique selon la revendication 3, dans lequel les deux zones consistent en une zone axialement extérieure (34), de module donné, et une zone axialement intérieure (35) dont le module est plus faible.

5. Pneumatique selon l'une des revendications 1 ou 2, dans lequel l'insert extérieur comporte trois zones (33, 34, 35).

6. Pneumatique selon la revendication 5, dans lequel les trois zones consistent en une zone sensiblement centrale (33), ayant le module le plus élevé, une zone axialement intérieure (35), de module inférieur à celui de la zone centrale, et une zone axialement extérieure (34), aussi de module inférieur à celui de la zone centrale.

7. Pneumatique selon la revendication 6, dans lequel le module de la zone axialement intérieure (35) est supérieur à celui de la zone axialement extérieure (34).

8. Pneumatique selon la revendication 6, dans lequel le module de la zone axialement extérieure (34) et le module de la zone axialement intérieure (35) sont sensiblement égaux.

9. Pneumatique selon l'une des revendications 1 à 8, dans lequel l'insert intérieur comporte au moins deux zones (34, 35), dont une zone axialement extérieure, de module donné, et une zone axialement intérieure, dont le module est plus faible.

10. Pneumatique selon l'une des revendications 1 à 8, dans lequel l'insert intérieur comporte trois zones (33, 34, 35), dont une zone sensiblement centrale (33), ayant le module le plus élevé, une zone axialement intérieure (35), de module inférieur à celui de la zone centrale, et une zone axialement extérieure (34), aussi de module inférieur à celui de la zone centrale.

## Claims

1. A tyre suitable for extended-mobility travel, comprising at least one carcass-type reinforcement structure (10) anchored on each side of said tyre in a bead the base of which is intended to be mounted on a rim seat, each of said beads extending substantially radially externally in the form of sidewalls, namely an inner sidewall (61), intended to be positioned on the inside of the vehicle, and an outer sidewall (62), intended to be positioned on the outside of the vehicle, the inner and outer sidewalls radially towards the outside joining a tread (70), the carcass-type reinforcement structure extending circumferentially from the bead towards said sidewall, a crown reinforcement (80), each of the beads furthermore comprising an anchoring zone permitting the reinforcement structure to be held, each of said sidewalls being reinforced by a sidewall insert, namely an inner insert (31) in the inner sidewall, and an outer insert (32) in the outer sidewall, said inserts being formed of rubber composition enabling the sidewalls to bear a load corresponding to part of the weight of the vehicle in a situation in which the inflation pressure is substantially reduced or zero, the inner sidewall having a substantially higher modulus than the outer sidewall, the outer insert (32) and the inner insert (31) being subdivided into an unequal number of zones.

2. A tyre according to Claim 1, in which the outer insert (32) comprises a higher number of zones than the inner insert (31).

3. A tyre according to one of Claims 1 or 2, in which the outer insert (32) comprises at least two zones (34, 35).

4. A tyre according to Claim 3, in which the two zones consist of an axially outer zone (34), of given modulus, and an axially inner zone (35), the modulus of which is lower.

5. A tyre according to one of Claims 1 or 2, in which the outer insert comprises three zones (33, 34, 35).

6. A tyre according to Claim 5, in which the three zones consist of a substantially central zone (33), having the highest modulus, an axially inner zone (35), of lower modulus than that of the central zone, and an axially outer zone (34), also of lower modulus than that of the central zone.

7. A tyre according to Claim 6, in which the modulus of the axially inner zone (35) is greater than that of the axially outer zone (34).

8. A tyre according to Claim 6, in which the modulus of the axially outer zone (34) and the modulus of the axially inner zone (35) are substantially equal.

9. A tyre according to one of Claims 1 to 8, in which the inner insert comprises at least two zones (34, 35), one an axially outer zone, of given modulus, and one an axially inner zone, the modulus of which is lower.

10. A tyre according to one of Claims 1 to 8, in which the inner insert comprises three zones (33, 34, 35), one a substantially central zone (33), having the highest modulus, an axially inner zone (35), of lower modulus than that of the central zone, and an axially outer zone (34), also of lower modulus than that of the central zone.

## Patentansprüche

1. Luftreifen, der für ein Rollen mit erweiterter Mobilität geeignet ist, mit mindestens einer Verstärkungsstruktur (10) vom Karkassentyp, die auf jeder Seite des Luftreifens in einem Wulst verankert ist, dessen Basis dazu bestimmt ist, auf einen Felgensitz montiert zu werden, wobei jeder der Wülste sich im Wesentlichen radial außen in Form von Flanken erstreckt, nämlich einer inneren Flanke (61), die dazu bestimmt ist, auf der Innenseite des Fahrzeugs positioniert zu werden, und eine äußere Flanke (62), die dazu bestimmt ist, auf der Außenseite des Fahrzeugs positioniert zu werden, wobei die innere und die äußere Flanke radial nach außen an eine Lauffläche (70) anschließen, wobei die Verstärkungsstruktur vom Karkassentyp sich in Umfangsrichtung vom Wulst zur Flanke erstreckt, mit einer Scheitelbewehrung (80), wobei jeder der Wülste außerdem eine Verankerungszone aufweist, die den Halt der Verstärkungsstruktur erlaubt, wobei jede der Flanken durch eine Flankeneinlage verstärkt ist, d.h. eine innere Einlage (31) in der inneren Flanke und eine äußere Einlage (32) in der äußeren Flanke, wobei die Einlagen aus einer Kautschukzusammensetzung bestehen, die es den Flanken ermöglicht, eine Last entsprechend einem Teil des Gewichts des Fahrzeugs in einer Situation zu tragen, in der der Fülldruck deutlich reduziert oder Null ist, **dadurch gekennzeichnet, dass** die innere Flanke einen deutlich höheren Modul hat als die äußere Flanke, wobei die äußere Einlage (32) und die innere Einlage (31) in eine ungleiche Anzahl von Zonen unterteilt sind.

2. Luftreifen nach Anspruch 1, bei dem die äußere Einlage (32) eine größere Anzahl von Zonen aufweist als die innere Einlage (31).

3. Luftreifen nach einem der Ansprüche 1 oder 2, bei dem die äußere Einlage (32) mindestens zwei Zonen (34, 35) aufweist.

4. Luftreifen nach Anspruch 3, bei dem die zwei Zonen aus einer axial äußeren Zone (34) mit gegebenem Modul und einer axial inneren Zone (35) bestehen, deren Modul niedriger ist.

5. Luftreifen nach einem der Ansprüche 1 oder 2, bei dem die äußere Einlage drei Zonen (33, 34, 35) aufweist.

6. Luftreifen nach Anspruch 5, bei dem die drei Zonen aus einer im Wesentlichen zentralen Zone (33) mit dem höchsten Modul, einer axial inneren Zone (35) mit einem niedrigeren Modul als die zentrale Zone und aus einer axial äußeren Zone (34) auch mit niedrigerem Modul als die zentrale Zone bestehen.

7. Luftreifen nach Anspruch 6, bei dem der Modul der axial inneren Zone (35) höher ist als derjenige der axial äußeren Zone (34).

8. Luftreifen nach Anspruch 6, bei dem der Modul der axial äußeren Zone (34) und der Modul der axial inneren Zone (35) im Wesentlichen gleich sind.

9. Luftreifen nach einem der Ansprüche 1 bis 8, bei dem die innere Einlage mindestens zwei Zonen (34, 35) aufweist, darunter eine axial äußere Zone mit einem gegebenen Modul und eine axial innere Zone, deren Modul niedriger ist.

10. Luftreifen nach einem der Ansprüche 1 bis 8, bei dem die innere Einlage drei Zonen (33, 34, 35) aufweist, darunter eine im Wesentlichen zentrale Zone (33) mit dem höchsten Modul, eine axial innere Zone (35) mit einem niedrigeren Modul als die zentrale Zone, und eine axial äußere Zone (34) auch mit einem niedrigeren Modul als die zentrale Zone.
